# EUROPEAN PATENT APPLICATION

(11) **EP 3 023 912 A1**
(43) Date of publication of application: **25.05.2016**
(21) Application number: 15184755.5
(22) Date of filing: 10.09.2015
(51) Int. Cl.: G06K 9/48, G06T 7/00

(54) **CRACK DATA COLLECTION APPARATUS AND SERVER APPARATUS TO COLLECT CRACK DATA**

(30) Priority: 11.11.2014 JP 2014229218
(71) Applicant: Kabushiki Kaisha Toshiba, Tokyo 105-8001 (JP)
(72) Inventor: KURATATE, Takaaki, Minato-ku, Tokyo 105-8001 (JP); KUBOTA, Susumu, Minato-ku, Tokyo 105-8001 (JP); NAKAMURA, Norihiro, Minato-ku, Tokyo 105-8001 (JP); NAKASHIMA, Ryo, Minato-ku, Tokyo 105-8001 (JP); YAMAZAKI, Masaki, Minato-ku, Tokyo 105-8001 (JP); SEKI, Akihito, Minato-ku, Tokyo 105-8001 (JP)
(74) Representative: Noble, Nicholas

(57) **Abstract**

According to one embodiment, a crack data collection apparatus includes an acquisition unit (17), a detector (12, 13, 14), a calculator (12, 13, 14) and a storage unit (15). The acquisition unit (17) acquires an image obtained by photographing an inspection object region for a crack in a structure. The detector (12, 13, 14) detects a crack pixel group included in the inspection object region from the image. The calculator (12, 13, 14) successively sets turning points from a starting point to an end point on a contour of the crack pixel group, and calculates positions of the starting point, the turning points, and the end point and a vector of each of the points as crack data. The storage unit (15) stores the crack data.

## Description

### FIELD

Embodiments described herein relate generally to a crack data collection apparatus and a server apparatus to collect crack data.

### BACKGROUND

Various crack detection methods using an image of a structure have been presented. For example, with respect to cracks in concrete of tunnels, closure cracks can be detected by detecting crack line segments with subpixel precision equal to or higher than the imaging resolution from a result of subjecting the image to filtering.

### BRIEF DESCRIPTION OF THE DRAWINGS

FIG. 1 is a block diagram illustrating a configuration of a crack data collection apparatus according to a first embodiment.
FIG. 2 is a flowchart illustrating a first example of a crack data collection method applied to the first embodiment.
FIGS. 3A and 3B are flowcharts illustrating a second example of the crack data collection method applied to the first embodiment.
FIG. 4 is a diagram illustrating a specific data form of collected data in the first or second example.
FIG. 5 is a block diagram illustrating a configuration of a crack data collection system according to the second embodiment including a server apparatus according to the second embodiment.
FIG. 6 is a diagram illustrating an example of a crack for explaining the first and second examples.

### DETAILED DESCRIPTION

In general, according to one embodiment, in maintenance of various structures such as roads, tunnels, bridges, and buildings, it is important to perform periodical inspection and collect, classify, and accumulate inspection results, to secure safety of the structures and extend the life of the structures. For example, grasping and managing the state of cracks are important to avoid damages that may occur in the future.

It is required to store the processed image serving as the basis of detection or the image itself, to view detection results of cracks or check a change of a crack over time in the same place. However, it is necessary to store an enormous data amount of processed images or images in the case where the structure is a road or a tunnel extending along a long distance or a building extending along a wide range. The data amount of images for a structure that is periodically inspected further increases each time inspection is performed. In the present embodiment, a region such as a crack obtained as image data is converted into a numerical value, to reduce the data amount. In addition, reproducibility of the crack to be inspected is highly maintained, to facilitate checking of a change.

Cracks in the structure includes not only mere cracks but also differences in level caused by peeling or dent on the surface, and rises caused by expansion of the inside portion. Although cracks are explained as an example in the present embodiment, the cracks are not limited to crevices or cracks such as clefts.

Embodiments of the present invention will be explained hereinafter.

### (First Embodiment)

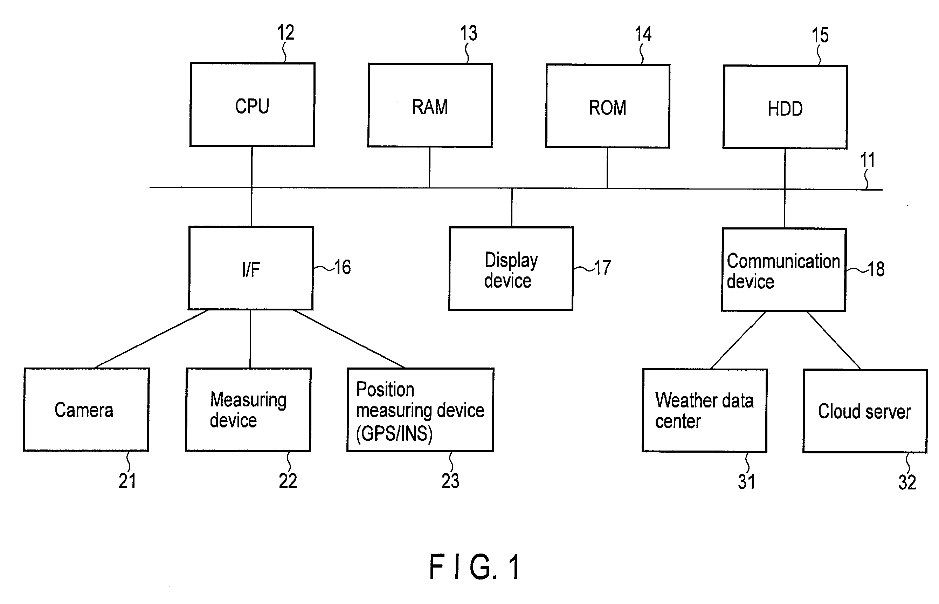

FIG. 1 is a block diagram illustrating a configuration of a crack data collection apparatus according to the first embodiment. In FIG. 1, reference numeral 11 denotes a bus line. The bus line 11 is connected with a central processing unit (CPU) 12 that controls the whole apparatus, a random access memory (RAM) 13 that serves as a work area to store data, a read only memory (ROM) 14 that stores a program that causes the CPU 12 to execute control processing, a hard disk drive (HDD) 15 that stores acquired images and processing data and the like, an interface (I/F) 16 that fetches image data from a camera 21, three-dimensional point group data from a measuring device 22, and position/time/attitude data from a position measuring device 23 such as a global positioning system (GPS) and an inertial navigation system (INS), a display device 17 that displays acquired images and processing results, and a communication device 18 to exchange data with data providing devices such as a weather data center 31 and a cloud server 32.

The ROM 13 stores a crack data collection program to execute the crack data collection method according to the embodiment. When the CPU 12 receives an instruction to execute crack data collection, the CPU 12 loads the crack data collection program from the ROM 13. In accordance with the program, the CPU 12 acquires an image obtained by photographing an inspection object region (hereinafter referred to as "inspection region") for cracks in the structure from the camera 21, and detects a pixel group of a crack included in the inspection region from the image. The CPU 12 successively sets turning points from the starting point to the end point on the contour of the pixel group, analyzes the positions of the set starting point, the turning points, and the end point, and vectors of the respective points, and stores them in the HDD 14 as crack data. When three-dimensional point group data obtained by the measuring device 22 exists for the inspection region of the acquired image, the CPU 12 analyzes depth (depth) data of the crack from the three-dimensional point group data, to store the depth data as an item of the crack data. The CPU 12 also fetches position/time/attitude data of the inspection region from the position measuring device 23 when the inspection region is photographed, to store the data as an item of the crack data. The CPU 12 also acquires weather data in photographing from the weather data center 31, to store the weather data as an item of the crack data. The CPU 12 also calculates a degree of the crack range in the inspection object region from the stored crack data, to store the degree as the crack data. The CPU 12 transmits stored crack data collection results of the inspection region to the cloud server 32 through a network or the like, to enable the cloud server 32 to grasp a crack occurrence state of a wide area together with crack data collection results of another inspection region.

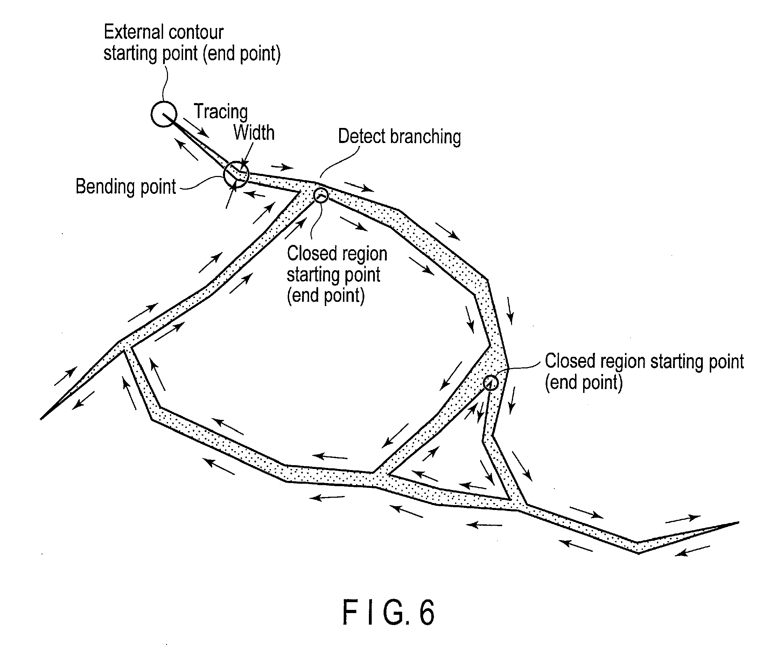

The following is explanation of a specific example of a crack data collection method in the above structure, with reference to the example of a crack illustrated in FIG. 6.

### [First Example]

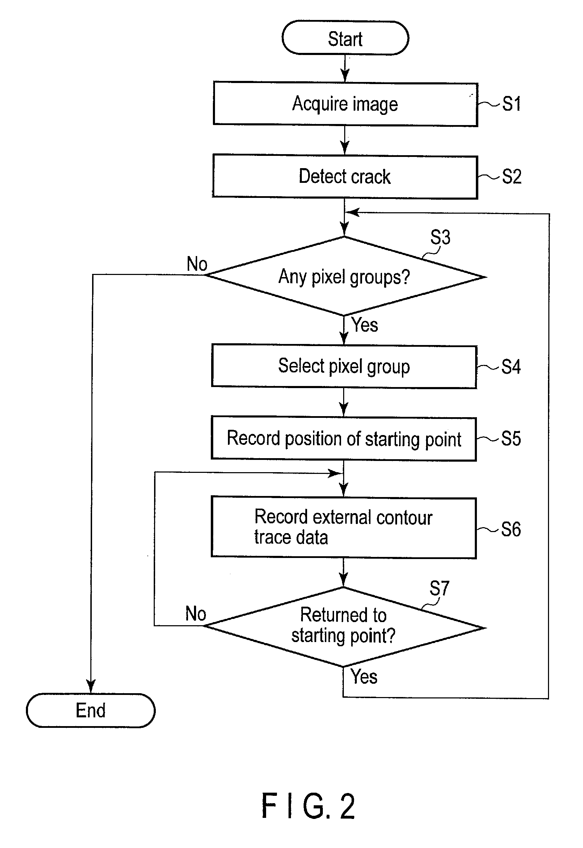

FIG. 2 is a flowchart illustrating a flow of a process of the crack data collection method according to the first example.

First, an image obtained by photographing a region serving as an inspection object of the target structure is acquired (Step S1). In the processing, when it is possible to obtain detailed position data of the camera, azimuth data including attitude data, and three-dimensional point group data together with the acquired image, these items of data are used as additional data of the image. The three-dimensional point group data is a point cloud that is prepared as a result of three-dimensional measurement, and three-dimensional data capable of indicating the position and the shape of the surface of the object. For example, a relative distance from the target object, that is, the structure to be imaged is used as original data of the point cloud, when the measuring device 22 is a laser measuring device. When the absolute coordinates (such as the longitude, the latitude, and the altitude) of the laser measuring device can be measured with a GPS or the like, the data may be displayed with the absolute coordinates. The time may be added to the data.

A pixel group of the crack is detected from the acquired image by image processing (Step S2). In the case where the road is inspected, an example of the method for detecting a pixel group of the crack from the acquired image is a method of automatically generating a parallel image filter by genetic programming, to extract a crack (crevice) of the paved road and evaluate the damage level thereof. When concrete is inspected, the method to be used is a method of detecting crack line segments with subpixel precision equal to or higher than the imaging resolution from a result obtained by subjecting the acquired image to filtering, to detect closure cracks, a method of extracting deformation from the image of the concrete structure surface such as a tunnel wall surface, storing a coordinate value for each deformation, and correlating the values with the hierarchical grid to present the data as proper deformation data for an individual inspection that requires different scales, or a method using wavelet transformation. Other methods using various image filters may be used to specify a pixel group serving as a set as a crack.

After the crack detection processing, it is determined whether any set of crack pixel groups to be processed exists (Step S3). When crack pixel groups exist, one of the crack pixel groups is selected (Step S4).

Any point of the external circumference of the selected crack pixel group is set as a starting point, and data of the starting point is recorded (Step S5). Any method may be used as a method for setting the starting point, such as a method of designating a point located at the uppermost end, lowermost end, right end, or left end of a rectangular region including the pixel group, or a method of designating a point that is most distant from the center of gravity of the pixel group or the average coordinates of the pixel group.

Next, pixels that are positioned along an external contour of the pixel group are traced from the starting point. Position data at a turning point that is reached by tracing the external contour of the pixel group is recorded, and pixels between the external contours at the turning point are recorded as the width. For example, when the tracing goes from the contour position at the turning point toward the pixel group corresponding to the crack, the distance to the external contour located on the opposite side is recorded as the width (width of the crack) (Step S6).

When more data can be recorded, the width of the crack at a plurality of points between turning points may be recorded as the width of the crack. The position data may be the absolute position data on the image or relative position data from the previous trace position. When the data amount should be reduced, any method may be used to hold only data of the base point and difference data from the base point as the relative position data. With respect to tracing, data with higher reproducibility can be obtained by accurately tracing the boundary of the crack pixel group. It is possible to perform approximation in consideration of the accumulated data amount. For example, when a crack in an oblique direction is detected as a pixel group in the acquired image, the crack should be simplified as a straight line. In the simplification, the data amount can be further reduced using chain coding or encoding combined with run-length encoding. Encoding using a straight line or a spline curve may be used, when the error falls within an allowable range in checking the crack and examining change of the detection result. A plurality of expression methods may be used for the position data. The data can be further compressed by properly selecting and using an expression that generates a least amount of data.

When three-dimensional point group data can be obtained as additional data, three-dimensional coordinate values corresponding to the traced turning point may be recorded as position data obtained by adding depth data to the position data on the plane corresponding to the turning point. Supposing that the imaging surface of the image including the crack is an X-Y plane, the value in the Z-axis direction can be obtained by obtaining the three-dimensional coordinate value. The depth data indicates data in the Z-axis direction. Using the data in the Z-axis direction provides data as to whether the pixel group corresponding the crack rises or is depressed in comparison with the supposed plane. When the three-dimensional point group is obtained with high precision, the degree of the distance (whether the group is higher or deeper than the plane) from the plane. If no three-dimensional point that corresponds to the traced turning point one by one exists, three-dimensional coordinate values of at least two closest points should be used to estimate corresponding position data by interpolation.

Tracing by the above process is repeated for the external contour. When the tracing returns to the starting point, the processing on the crack pixel group is ended. When the tracing point has not returned to the starting point, the tracing is continued (Step S7). When the processing on the crack pixel group is ended, the process returns to Step S3, and the next crack pixel group to be processed is selected. When no other crack pixel group is left, the processing is ended.

With the above flow of the process, each crack existing in the acquired image can be expressed with the starting point and the positions and widths of the turning points by tracing. In particular, the number of traces and the absolute length serving as length data may be recorded as final data, to indicate the end of each crack.

### [Second Example]

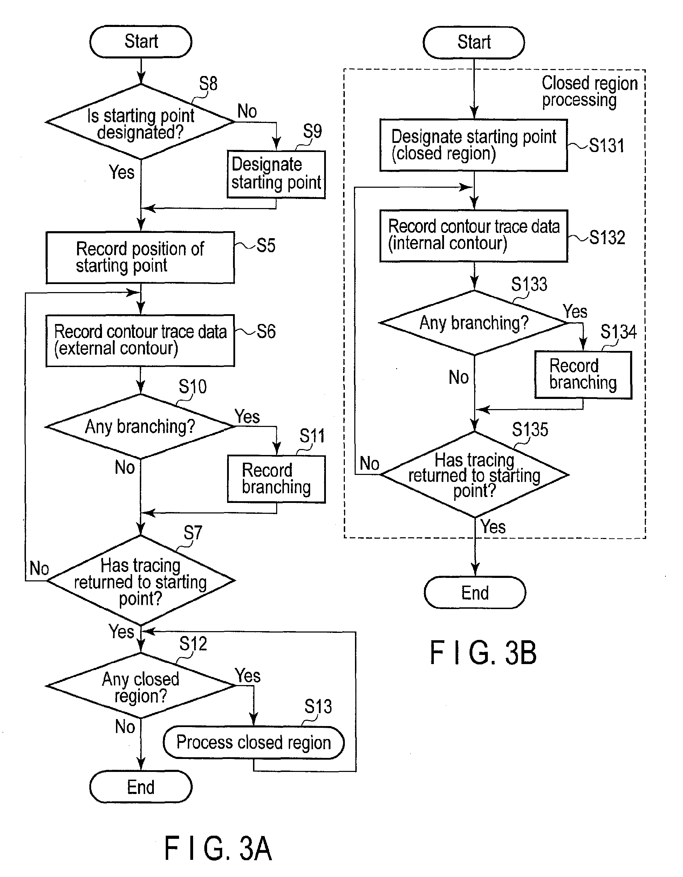

FIGS. 3A and 3B are flowcharts illustrating a flow of the process of the crack data collection method according to the second example. In the present example, because the same processing as that of the second example is performed from Step S1 to Step S4 of FIG. 2, the processing steps are omitted in FIGS. 3A and 3B. The present example is an example in which the part from Step S5 to Step S7 is improved, to enable processing on cracks including branched regions and closed regions. FIG. 3A illustrates the whole processes, and FIG. 3B is a flowchart illustrating details of the processing step S13 for the closed region illustrated in FIG. 3A.

First, after processing in Steps S1 to S4 illustrated in FIG. 2, it is determined whether the starting point position is designated (Step S8). The determination is required when the starting position is set inside the closed region or in an unprocessed external contour line in following Step S13. When the starting point position is set, the set starting point position is used. If no starting point position is set, any starting point position is set on the contour of the current crack pixel group (Step S9).

Next, the starting point position is recorded (Step S5), and the external contour is traced to record data of the external contour turning points of the pixel group (Step S6). The steps of the processing are the same as those in the processing in FIG. 2. The contour referred to as external circumference is the external contour of the crack pixel group and includes the contour on the closed side of the closed region.

In the tracing, the external contour in the vicinity of the turning point of the trace is checked to determine whether any branching occurs (Step S10). An example of a method for determining whether any branching occurs is a method of setting an imaginary circle having a certain size around the trace point, checking the pixels running on the imaginary circle, and counting the number of boundaries between the pixel group corresponding to the crack and the region other than the pixel group. In this case, the boundaries of pixels of a crack count four if the trace point does not include branching, while the boundaries count six or more if the trace point includes branching. By contrast, if the boundaries counts only two, the size of the imaginary circle is too small, and determination should be made again with an enlarged imaginary circle. With such a method, if any branching exists, data of the branching is recorded (Step S11). If the width cannot be uniquely determined due to branching, the widths of portions before and after the branching are determined, to record the two values, or to record a mean value of the two values.

Thereafter, it is checked whether the tracing has returned to the starting point (Step S7). When the tracing has not returned to the starting point, the processing returns to Step S6 to continue tracing. When the tracing has returned to the starting point, it is checked whether the traced external contour includes a closed region (Step S12). It can be easily determined by comparing, for example, the number of pixels of the crack pixel group being processed and the area of the external contour that have been processed. For example, the first pixel group that can be estimated using relative position data of the starting point, the end point, and the turning points of the external contour is compared with the second pixel group that can be estimated using the external contour and the width of the crack. When the first pixel group estimated by using the relative position data is greater than the pixel group estimated by using the width, it is determined that a closed region exists. A width between external contours at the turning point should be preferably used as the width of the crack to be used in this case.

When it is determined in Step S12 that a closed region exists, the position of the starting point in the closed region is set (Step S13). In the setting, the contour on the closed region side is used as the internal contour. The starting point of the closed region is set (Step S131) for the internal contour in the same manner as the above external contour, to trace pixels positioned along the internal contour. Then, the data of the traced turning points are recorded (S132). In the tracing, the internal circumference in the vicinity of the turning point of the trace is checked to determine whether any branching occurs (Step S133). If any branching exists, data of the branching is recorded (Step S134). Thereafter, it is checked whether the tracing has returned to the starting point (Step S135). When the tracing has not returned to the starting point, the processing returns to Step S132 to continue tracing. When the tracing has returned to the starting point, the processing returns to Step S12 to check whether the external contour includes another closed region. When it is determined that the external contour includes another closed region, the processing of Step S13 is executed. When it is determined that no other closed region to be processed exists, a series of processing on the crack pixel group being processed is ended.

Any method can be used as the method for determining the position of the starting point of the closed region in the internal contour, such as a method of determining a rectangular region enclosed by the internal contour in the same manner as the above case of the external contour, and setting a point located at the uppermost end, the lowermost end, the right end, or the left end of the rectangular region, and a method of designating a point that is most distant from the center of gravity or the mean coordinates of the pixel group that does not serve as the object but is enclosed by the internal contour. The same processing can be used to deal with the case where the crack pixel group being processed includes a plurality of closed regions.

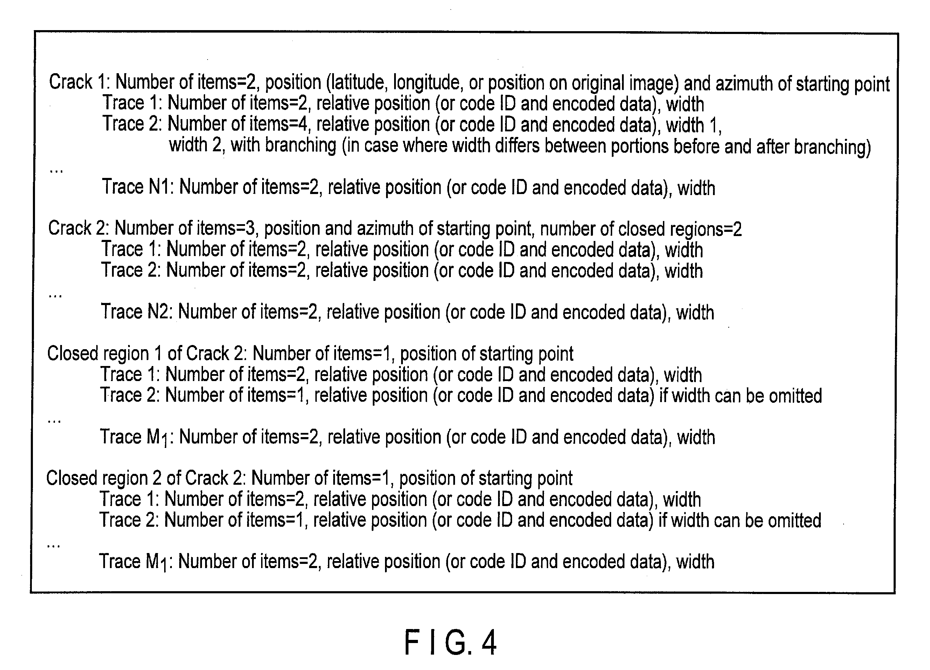

FIG. 4 illustrates a specific data form of the collected data in the first or second example. The measurement data preferably includes map coordinate data (latitude, longitude), time, azimuth attitude data (direction, elevation angle, depression angle), weather, original image size, resolution, camera parameters, and presence/absence of the three-dimensional point group, as additional data.

The present embodiment as described above has the structure of acquiring an image obtained by photographing an inspection region of a crack in the structure, detecting a crack pixel group included in the inspection region from the image, successively setting turning points from the starting point to the end point in the contour of the crack pixel group, and analyzing the positions of the starting point, the turning point, and the end point and the vector of each of the points to collect them as crack data. Consequently, the present embodiment enables extraction of a crack obtained as image data, and substantial reduction in data amount with the complicated structure of the crack retained.

### (Second Embodiment)

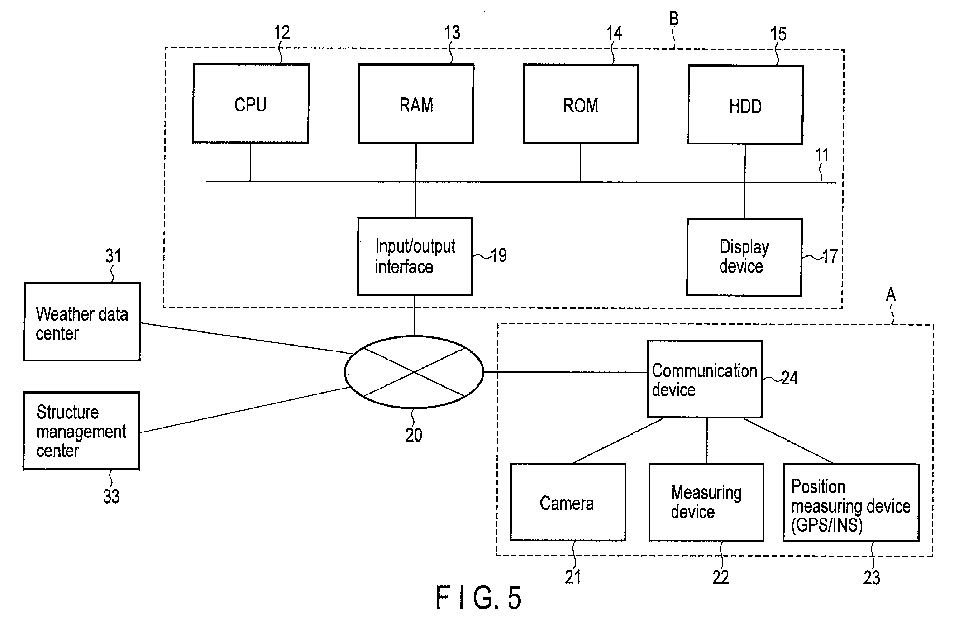

FIG. 5 is a block diagram illustrating a configuration of a crack data collection system including a server apparatus according to the second embodiment.

In FIG. 5, A denotes a data collection apparatus, and B denotes a server apparatus. A and B are connected through a network 20. The data collection apparatus A is mounted to, for example, a vehicle. The network 20 is connected with a structure management center 33 that manages maintenance of structures, as well as the weather data center 31 illustrated in FIG. 1. The server apparatus B may be the cloud server 32 illustrated in FIG. 1, or may be installed inside the structure management center 33.

The data collection apparatus A includes the camera 21, the measuring device 22, and the position measuring device 23 (such as a GPS and an INS) illustrated in the first embodiment. The data collection apparatus A transmits an image obtained by photographing the road surface of the inspection object region by the camera 21, three-dimensional point group data measured by the measuring device 22, and position/time/attitude data of the inspection object region measured by the position measuring device 23 from a communication device 24 to the server apparatus B through the network 20.

The server apparatus B includes the bus line 11, the CPU 12, the RAM 13, the ROM 14, the HDD 15, and the display device 17 illustrated in the first embodiment. The server apparatus B further includes an input/output interface (I/F) 19, to collect crack data by the collecting method explained in the first example or the second example.

The following is explanation of an example of use of the system with the above structure.

First, when the server apparatus B receives an instruction to collect crack data from the data collection apparatus A, the server apparatus B loads a crack data collection program from the ROM 13, and acquires an image transmitted from the data collection apparatus A and obtained by photographing an inspection object region for cracks in the structure by the camera 21, in accordance with the program. Then, the server apparatus B detects a crack pixel group included in the inspection object region from the acquired image, successively sets turning points from the starting point to the end point on the contour of the pixel group, and analyses the positions of the set starting point, the end point, and the turning points and the vector of each of the points, to store them as crack data in the HDD 14.

When the server apparatus B receives three-dimensional point group data measured by the measuring device 22 for the inspection object region of the acquired image from the data collection apparatus A, the server apparatus B generates position data from the three-dimensional point group data by adding depth data of the crack, and stores the position data as an item of the crack data. The server apparatus B also fetches the position/time/attitude data of the inspection object region from the position measuring device 23 in photographing the inspection region, to store the data as an item of the crack data. In many cases, the structure to be photographed is photographed in the outdoor environment. For this reason, for example, the pixel value may differ because the illuminance in the object region differs according to the time in photographing. These items of data can be taken into consideration in checking a change over time.

In the same manner, for example, because illuminance in the photographed object region differs between fine weather and cloudy weather, the weather data in photographing may be acquired from the weather data center 31, and stored as an item of the crack data. A degree of the crack range in the inspection object region may be calculated from the stored crack data. For example, the term "degree" means the number of estimated cracks in a predetermined range. The area of the crack occupying the predetermined range may be estimated based on the width of the crack, to be calculated as the degree in the predetermined range. These values are stored as crack data. In addition, a crack occurrence state of a wide area may be stored by combining the crack data with crack data collection results of another inspection region. For example, data of an area that is wider than the photographed region may be calculated, based on the coordinates obtained from the GPS or the like and the position data of the crack data result. The stored crack data collection result of the inspection region may be provided through the network or the like in response to a request from the structure management center 33.

With the crack collecting system according to the present embodiment, sensor data such as images of the inspection object region acquired by the data collection apparatus A is successively transmitted to the server B through the network 20. The server apparatus B is enabled to analyze and collect crack data in real time, and notify the structure management center 33 or the like of the analysis and collection result.

Although the second embodiment illustrates an example of the data collection apparatus A mounted to the vehicle, the data collection apparatus A may be, for example, a smartphone or a tablet personal computer having functions of the camera 21 and the position measuring device (GPS/INS) 23 illustrated in FIG. 5. Although the second embodiment illustrates an example in which the road surface serves as the inspection object, the wall surfaces of structures such as buildings, tunnels, and bridges can be inspected in the same manner.

While certain embodiments have been described, these embodiments have been presented by way of example only, and are not intended to limit the scope of the inventions. Indeed, the novel embodiments described herein may be embodied in a variety of other forms; furthermore, various omissions, substitutions and changes in the form of the embodiments described herein may be made without departing from the spirit of the inventions. The accompanying claims and their equivalents are intended to cover such forms or modifications as would fall within the scope and spirit of the inventions.

## Claims

1. A crack data collection apparatus **characterized by** comprising:
an acquisition unit (17) that acquires an image obtained by photographing an inspection object region for a crack in a structure;
a detector (12, 13, 14) that detects a crack pixel group included in the inspection object region from the image;
a calculator (12, 13, 14) that successively sets turning points from a starting point to an end point on a contour of the crack pixel group, and calculates positions of the starting point, the turning points, and the end point and a vector of each of the points as crack data; and
a storage unit (15) that stores the crack data.

2. The crack data collection apparatus according to claim 1, **characterized in that**
the calculator (12, 13, 14) traces an external contour of the crack pixel group, sets a starting pixel of the trace as the starting point and the end point, and sets turning pixels in the trace as the turning points.

3. The crack data collection apparatus according to claim 1, **characterized in that**
the calculator (12, 13, 14) calculates a pixel width to a contour on an opposite side at a position of each of the turning points, and the storage unit (15) stores the pixel width as the crack data.

4. The crack data collection apparatus according to claim 1, **characterized in that**
the calculator (12, 13, 14) detects branching of the crack at the position of each of the turning points, and the storage unit (15) stores data of the branching as the crack data.

5. The crack data collection apparatus according to claim 1, **characterized in that**
the calculator (12, 13, 14) further detects a closed region of the crack at the position of each of the turning points, successively sets turning points from a starting point to an end point on a contour of the closed region, and calculates positions of the starting point, the turning points, and the end point of the contour of the closed region and a vector of each of the points, and the storage unit (15) stores the positions of the starting point, the turning points, and the end point of the contour of the closed region and the vector of each of the points as the crack data.

6. The crack data collection apparatus according to claim 1, **characterized in that**
the acquisition unit (17) acquires at least one of position data, azimuth data, and weather data of the inspection object region as additional data, and the storage unit (15) stores the additional data as the crack data.

7. The crack data collection apparatus according to claim 1, **characterized in that**
the acquisition unit (17) acquires three-dimensional point group data of the inspection object region, the calculator (12, 13, 14) identifies the point group data as the crack pixel group and calculates depth data of the crack, and the storage unit (15) stores the depth data as the crack data.

8. The crack data collection apparatus according to claim 1, **characterized in that**
the calculator (12, 13, 14) calculates the position of each of the turning points based on a difference from the position of the adjacent turning point, and encodes difference data of the difference, and the storage unit (15) stores the encoded difference data as the crack data.

9. The crack data collection apparatus according to claim 8, **characterized in that**
the calculator (12, 13, 14) encodes the difference data by a plurality of encoding processes, and selects one of the encoding processes that generates the least encoding amount.

10. The crack data collection apparatus according to claim 1, **characterized in that**
the calculator (12, 13, 14) calculates a crack degree in the inspection object region from the crack data stored in the storage unit (15), and the storage unit (15) stores the crack degree as the crack data.

11. A server apparatus connected to a network, the apparatus includes the crack data collection apparatus according to any one of claims 1 to 10.
